# EUROPEAN PATENT SPECIFICATION

(11) **EP 4 043 850 B1**
(45) Date of publication and mention of the grant of the patent: **08.04.2026**
(21) Application number: 22155766.3
(22) Date of filing: 09.02.2022
(51) Int. Cl.: G01L 9/00, G01L 9/10, G01L 19/00

(54) **ELECTRODYNAMIC POSITION TRANSDUCER**
ELEKTRODYNAMISCHER POSITIONSWANDLER
TRANSDUCTEUR DE POSITION ÉLECTRODYNAMIQUE

(30) Priority: 16.02.2021 IT 202100003461
(43) Date of publication of application: 17.08.2022
(73) Proprietor: ELBI International S.p.A., 10129 Torino (IT)
(72) Inventor: CARRER, Giorgio, I-10141 TORINO (IT); BECCHIO, Marco, I-10041 CARIGNANO (Torino) (IT); BLENGINO, Andrea, I-10070 VILLANOVA CANAVESE (Torino) (IT); RAVEDATI, Paolo, I-10024 MONCALIERI (Torino) (IT)
(74) Representative: Vanzini, Christian

(56) References cited:
- EP-A2- 1 697 710
- US-A1- 2008 257 055
- US-B2- 7 180 285

## Description

This invention relates to an electrodynamic position transducer which may be used, for example, as a pressure transducer in washing machines or dishwashers, gas boilers for heating and other domestic appliances.

More specifically, the invention relates to a transducer according to claim 1.

US 7180285 B2 describes a conventional transducer in which the coil is made by winding a copper wire.

WO 2018/171998 A1 describes a transducer in which the coil is a planar spiral coil, and the interaction element is also a planar element positioned in front of the coil.

An object of the invention is to provide a transducer which has a more compact structure and which is cheaper and more reliable by comparison with conventional transducers such as the device described in US 7180285 B2.

A further object of the invention is to provide a transducer which is able to achieve better performance by comparison with the device described in WO 2018/171998 A1.

In view of these objects, the invention relates to a transducer of the kind defined at the outset in which said coil support is a circuit board which carries said circuit means, said frequency generator, electronic processing circuit and feed circuit being carried by the circuit board, wherein at least one hole being formed in the circuit board, which hole is configured to receive said interaction element in such a way that one end of the interaction element is positionable flush with said at least one turn or beyond said at least one turn, wherein said coil comprises a plurality of conductive track layers which are electrically connected to each other and alternate with layers of said circuit board.

By comparison with conventional devices, the transducer according to the invention has the following advantages:
- the two processes of winding and soldering the wires are removed, which processes are costly, qualitatively potentially problematic and not easy to control/repeat,
- advantages in terms of space since the flat coil occupies less axial space; the self-inductance value may be adjusted by working on the number of turns and on the internal and external diameter of the coil as well as on the shape,
- the wire of the coil not being exposed and instead being produced in the support reduces the effects of drift in the sensor in conditions of high humidity (in which, in the case of a traditional coil, parasitic capacitance forms).

By comparison with the device described in WO 2018/171998 A1, the inventors have discovered that the fact that the interaction element passes through allows a frequency-movement characteristic that is much more linear and ensures a greater range of the signal. By contrast, if this interaction element does not pass through, a non-linear and semi-flat curve is obtained for a large part of the travel of the metal element.

Further features and advantages of the invention will become clear from the detailed description that follows, given purely by way of non-limiting example and with reference to the accompanying drawings, in which:
Fig. 1 and 2 are sectional views which represent two embodiments of a transducer according to the invention;
Fig. 3 is an exploded view of the transducer in Fig. 1;
Fig. 4 is a graph which compares the frequency-movement characteristics of a transducer according to the invention (continuous line) and a transducer according to WO 2018/171998 A1 (dashed line);
Fig. 5 and 6 are plan views which represent two possible shapes of a coil of the transducer according to the invention;
Fig. 7 shows the topography of a possible embodiment of a multilayer coil of the transducer according to the invention;
Fig. 8 is a block diagram of an example of a circuit associated with the coil of the transducer;
Fig. 9 and 10 are sectional views which represent another embodiment of the invention and a not claimed example, respectively; and
Fig. 11a and 11b are sectional views which represent the geometric relationships between an interaction element and a turn of the coil of the transducer according to the invention.

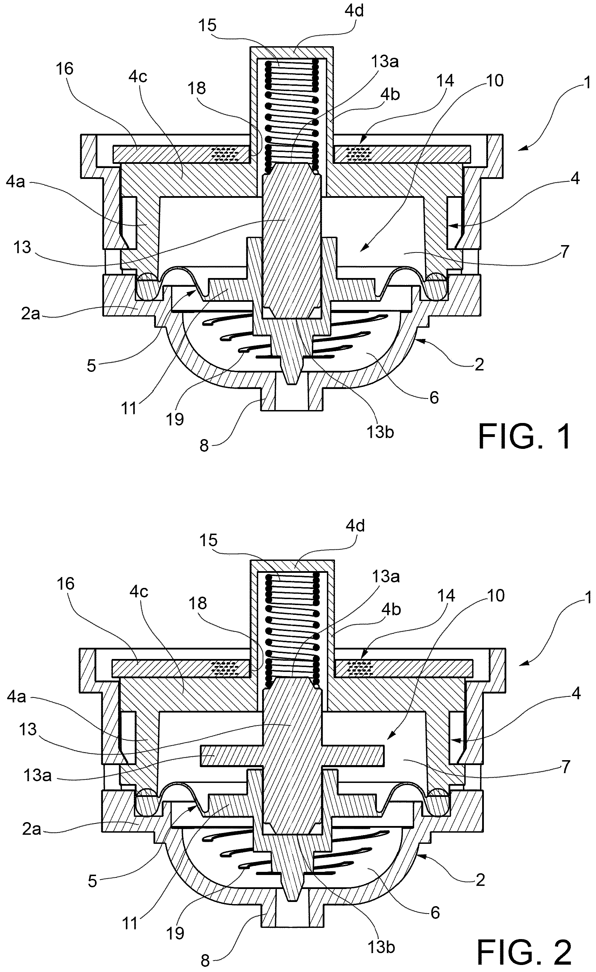

In Fig. 1, reference sign 1 indicates, as a whole, a transducer according to the invention.

In the embodiment shown by way of example, the transducer 1 is adapted to be used as a differential pressure transducer. However, as will be shown in the following, the invention is not limited to this type of transducer.

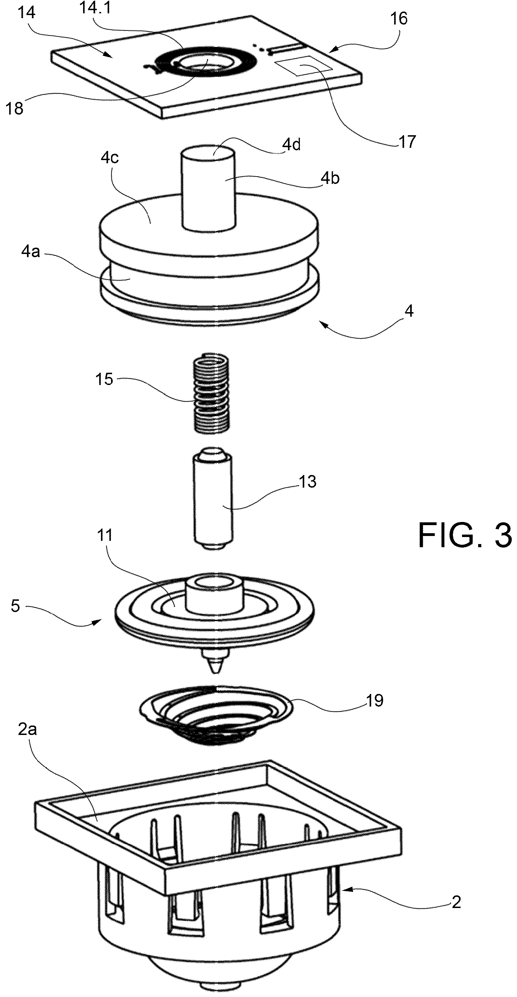

With reference to Fig. 3, the transducer 1 comprises a rigid casing formed by a first element 2 which is shaped substantially like a cup, and a second element (not shown) which is mounted on the cup element 2 like a cover.

A support body, which is indicated as a whole by reference sign 4, is positioned inside the casing of the transducer 1 and, in the example shown, is fixed to the first element 2 of the casing. This body has a lower annular portion 4a and an upper annular portion 4b which are connected to each other by a transverse annular wall 4c.

The end of the tubular portion 4b of the support body 4 is closed by a terminal wall 4d.

Reference sign 5 indicates a resilient membrane, for example consisting of an elastomeric material. The periphery of this membrane is clamped in a fluid-tight manner between the lower annular portion 4a of the support body 4 and a shoulder 2a of the cup body 2.

This membrane divides the region between the lower part of the cup body 2 and the support body 4 into two chambers of variable volume, which chambers are indicated by 6 and 7.

The cup element 2 of the casing of the transducer has a tubular connector 8 which allows a fluid to be introduced into the chamber 6. When in operation, the instantaneous position of the membrane 5 depends (for example) on the difference between the pressures prevailing in the chambers 6 and 7.

The central portion of the membrane 5 is connected to a movable part indicated as a whole by reference sign 10. This part comprises a washer 11 which is secured to the membrane 5 and to which an elongate element 13 made of ferromagnetic material, for example ferrite, is fixed, which elongate element is also referred to in the following as an interaction element.

With respect to the direction of movement determined by the membrane 5, which in the following is also defined as the axial direction, the interaction element 13 extends between a first end 13a thereof and a second end 13b thereof. The interaction element 13 extends in part axially into the upper tubular portion 4b of the support body 4.

In the embodiment shown, a helical spring 15 is arranged between the terminal wall 4d of the support body 4 and the first end 13a of the interaction element 13. A further spring 19, which has a substantially conical shape, is arranged in the chamber 6 between the washer 11 and the lower wall of the cup body 2.

A circuit board 16 is fixed to the terminal part 4d of the support body 4 on the opposite side to the membrane, which circuit board carries components and circuits of a kind known per se that are represented in a simplified manner in Fig. 3 by a rectangle indicated by 17.

A coil 14 is connected to these circuits, which coil comprises at least one turn formed by a pattern of flat conductive tracks 14.1 formed on the circuit board 16. The term "flat" is conventionally understood to mean that the tracks have a cross section such that the thickness of the track (i.e. the cross-sectional dimension of the track in the direction orthogonal to the support surface) is much smaller than the width of the track (i.e. the cross-sectional dimension of the track in the direction parallel to the support surface), for example less by at least one order of magnitude. This pattern of conductive tracks may be made using various technologies that are already available such as vacuum deposition, laser structuring and plating, selective plating, or activation of the support. Alternatively, the coil may be made by cutting sheets of conductive material (or material which has been made conductive using surface treatments) and then fixed to the support.

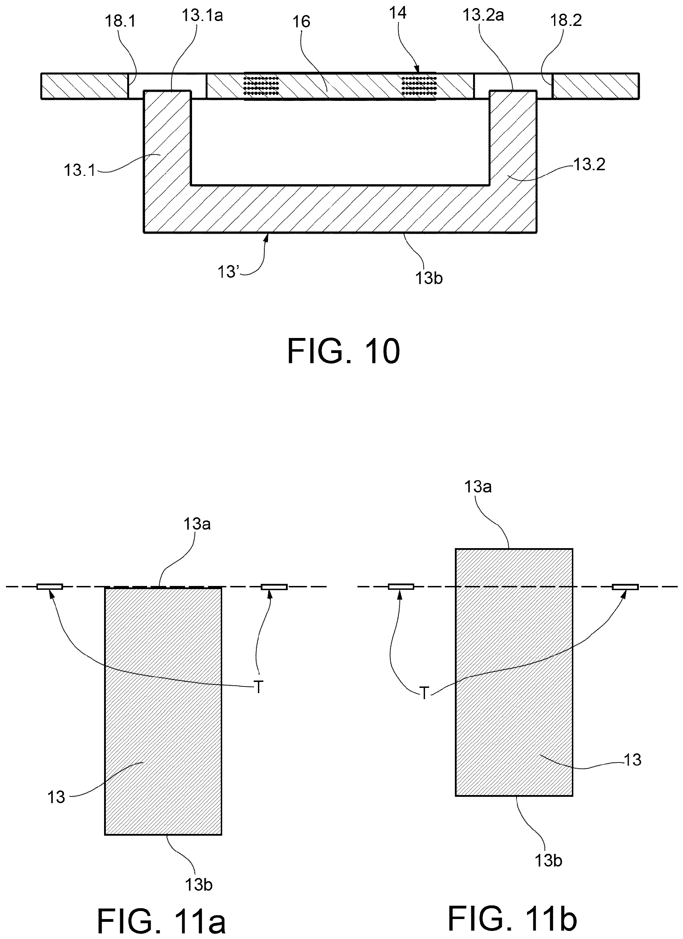

A hole 18 is formed in the circuit board 16, which hole is configured to receive the interaction element 13 in such a way that the first end 13a (i.e. the end of the interaction element closest to the coil 14) may be positioned flush with at least one turn T of the coil 14 (see Fig. 11a) or may be positioned beyond this turn T of the coil 14 (see Fig. 11b). For the purposes of this invention, "configured to receive" is understood to mean that, when in operation, after the movement of the membrane, the hole or recess is intended to receive an interaction element which, in the rest position, is normally arranged outside the hole or recess, but it is also understood that the interaction element may be received or accommodated in the hole or recess even when in the rest position. The first end 13a being "beyond" the reference turn T of the coil 14 is understood to be when the first end 13a is positioned to one side of this turn, which side is opposite to the side of the turn on which the second end 13b is positioned (see Fig. 11b). If the coil 14 comprises a plurality of turns arranged on different levels with respect to the direction of movement of the interaction element 13, the reference turn T of the coil 14 is the turn on the side of the coil 14 from which the interaction element 13 enters when the membrane 5 is stressed.

The hole 18 is formed as a through hole and is surrounded by the coil 14. In the following, a not claimed example will be described in which the hole or recess 18 is not surrounded by the coil.

When in operation as a differential pressure transducer, the instantaneous position of the membrane 5 depends on the difference between the fluid pressures in the chambers 6 and 7. As this difference varies, the movable part 10 moves axially relative to the coil 14. As the coupling between the interaction element 13 and this coil 14 varies, the self-inductance exhibited by the latter varies.

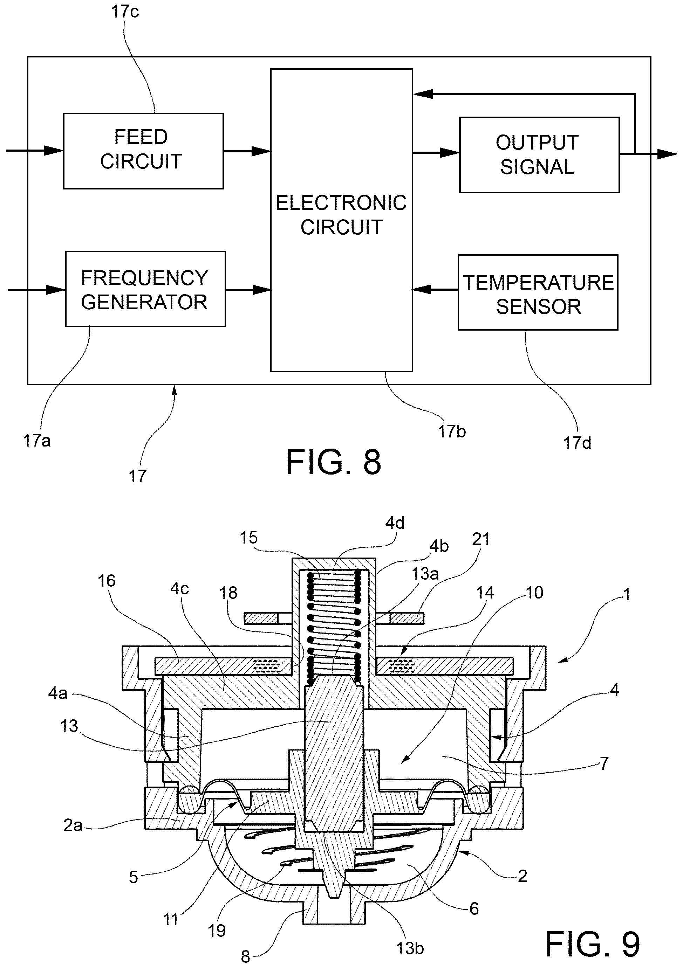

Fig. 8 shows the circuits 17 carried by the circuit board 16. These circuits comprise a frequency generator 17a connected to the coil 14, for example a Colpitts oscillator, the oscillation frequency of which varies as a result of the variation in self-inductance of the coil 14, and an electronic processing circuit 17b which reads the variation in frequency and generates an electrical output signal. The circuit board 16 is configured to be connected to an electronic control unit (not shown) of the apparatus in which the transducer 1 is intended to be installed, in order to transmit the aforementioned electrical signal to the electronic control unit. The circuits 17 also comprise a feed circuit 17c adapted to be connected to the external electronic control unit. Further components may also be arranged on the circuit board 16, such as flow meters or electrical connections to other actuators/sensors, for example optical actuators/sensors or conductivity, temperature or humidity sensors, etc. In particular, a temperature sensor 17d, for example an NTC sensor, may be provided, which sensor is configured to provide a temperature signal indicative of the ambient temperature, which signal is processed by the electronic circuit 17b in order to compensate for the frequency output signal.

According to a not claimed example which is not shown, the coil 14 may be made on a support which is separate from the circuit board 16 and which may be rigid or flexible.

In the example described above, the interaction element 13 is coupled to the membrane 5 and is therefore movable, while the coil 14 is fixed to the stationary part of the transducer 1. In an alternative embodiment which is not shown, the coil is coupled to the membrane and is therefore movable, while the interaction element is fixed to the stationary part of the transducer. According to other embodiments, both the coil and the interaction element may be movable.

Fig. 2 shows another embodiment of the invention. Elements corresponding to those in Fig. 1 and 3 have been assigned the same reference signs; these elements will not be described again. The embodiment in Fig. 2 differs from that in Fig. 1 on account of the shape of the interaction element 13, which in Fig. 2 has a disc-shaped extension extending radially from the main body of the interaction element 13.

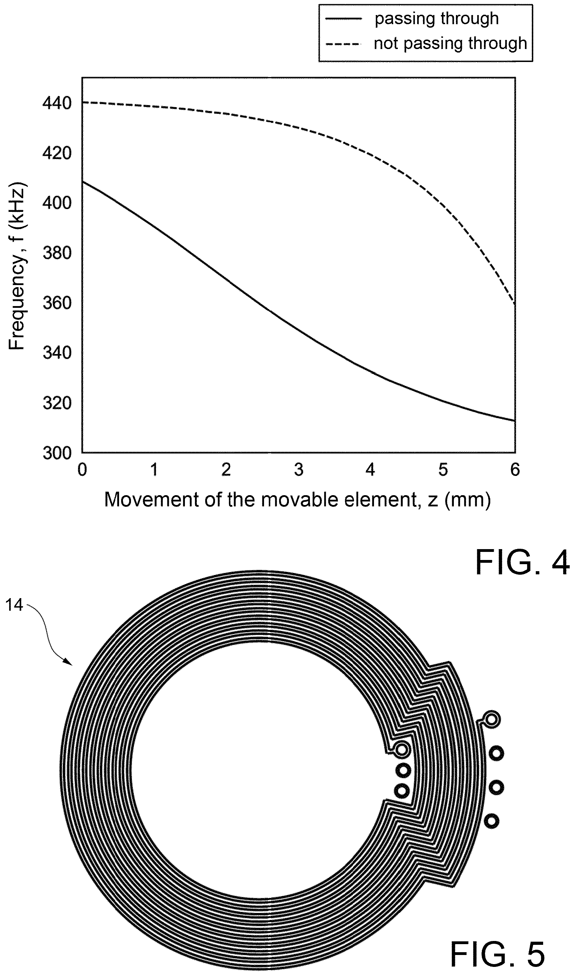

Fig. 4 is a graph which compares the frequency-movement characteristics of the transducer described above (continuous line) and a transducer according to WO 2018/171998 A1 (dashed line). The fact that the interaction element passes through the coil makes it possible to have a frequency-movement characteristic that is much more linear and ensures a greater range of the signal. In contrast, if this interaction element does not pass through, a non-linear and semi-flat curve is obtained for a large part of the travel of the interaction element.

In the embodiments described above, the coil is planar, and the following description cites possible examples of this preferred configuration; however, the invention also provides for non-planar coils.

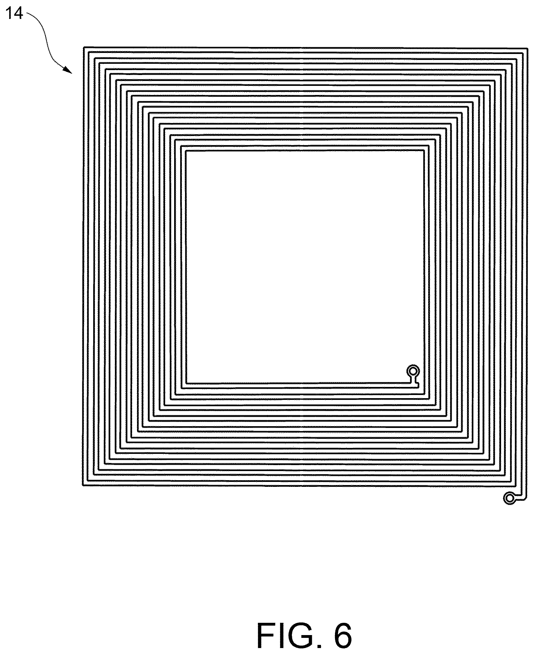

The coil 14 comprises a plurality of turns arranged on different levels. The turns may be ring-shaped or arranged in a spiral; they may be square-shaped, polygonal with a number of sides greater than 4, circular or oval, or have other irregular shapes; these shapes may be advantageous in terms of the self-inductance generated (see for example IEEE Journal of Solid State Circuits, vol. 34, no. 10, Oct 1999 - Simple Accurate Expression for Planar Spiral Inductances) and/or make it possible to minimize the distance to the interaction element in order to maximize the resolution of the transducer. By way of example, Fig. 5 and 6 show two possible shapes of a spiral coil 14. In the example in Fig. 5, the turns of the coil 14 have an approximately overall circular shape, with a portion of each turn being staggered with respect to the remainder of the turn. In the example in Fig. 6, the turns of the coil have an approximately square shape.

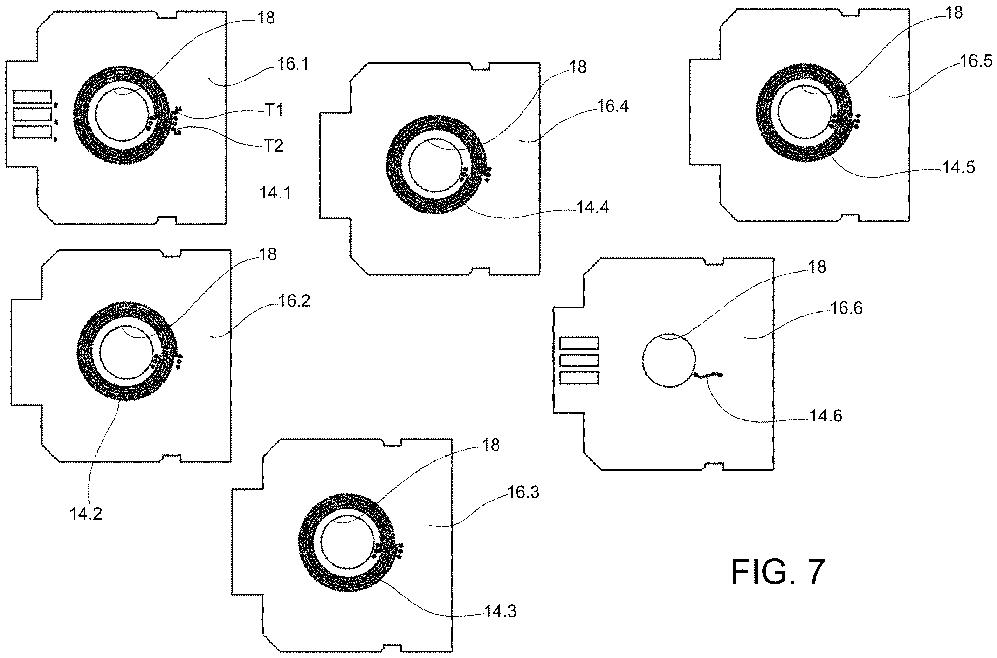

The coil 14 comprises a plurality of layers of conductive track that are electrically connected to each other. For this purpose, the support 16 of the coil 14 is multi-layered, and the various layers of conductive track may be connected to each other by means of vias made through the various layers of the support. By way of example, Fig. 7 represents a possible embodiment of a multilayer coil 14. Reference signs 16.1-5 indicate the layers of the support 16, while 14.1-14.5 indicate the layers of conductive track that form the multilayer coil 14. Reference signs T1 and T2 indicate the terminal contacts of the coil 14. In the support layer 16.6, the conductive track layer 14.6 forms a bridge which establishes the electrical connection between an end of the adjacent conductive track layer 14.5 and the terminal contact T2. In general, the layers of conductive track may be arranged such that adjacent layers have a concordant or discordant direction of current circulation.

More generally, each layer of conductive track may have a different shape and/or number of turns from the adjacent layers. The coil may also be formed only on internal layers (and not all of the layers available in the support) so as to reduce the parasitic capacitances in particular environmental conditions.

Fig. 9 shows another embodiment of the invention. Elements corresponding to those in Fig. 1 and 3 have been assigned the same reference signs; these elements will not be described again. The embodiment in Fig. 9 differs from the embodiment in Fig. 1 in that it comprises an annular magnetic circuit element 21 adapted to interact magnetically with the interaction element 13. The magnetic circuit element 21 is stationary relative to the coil 14 and arranged co-axially with the interaction element 13. This additional element makes it possible to improve the magnetic circuit formed by the interaction element 13 when the interaction element is moved; in so doing, the frequency-movement characteristic is more linear and has a greater range. In the example shown, the magnetic circuit element 21 is fixed to the support body 4 of the transducer in a manner known per se, and is arranged on the side of the coil 14 opposite to the side of the coil 14 from which the interaction element 13 enters.

Fig. 10 shows a not claimed example. Elements corresponding to those in Fig. 1 and 3 have been assigned the same reference signs; these elements will not be described again. The non claimed example in Fig. 10 differs from the preceding embodiments in that the interaction element, now indicated by reference sign 13', is located outside the space delimited by the coil 14. In the example shown, the interaction element 13' has an approximately horseshoe shape, having two elongate arms 13.1 and 13.2 extending in the relative direction of movement of the interaction element 13' with respect to the coil 14. The interaction element 13' therefore has two first ends, indicated by 13.1a and 13.2a, and the coil support 16 has two holes or recesses 18.1 and 18.2 arranged in approximately diametrically opposing positions with respect to the coil 14 and outside the space delimited by the coil 14. The two holes or recesses 18.1 and 18.2 are configured to receive the interaction element 13' in such a way that the first ends 13.1a and 13.2a may be positioned flush with at least one turn of the coil 14, or may be positioned beyond this turn of the coil 14.

A transducer according to the invention may be used to transduce physical quantities in electrical signals, which physical quantities are different from a pressure but are in any case capable of causing a relative movement of the interaction element with respect to the coil.

## Claims

1. An electrodynamic position transducer (1) comprising
a rigid, hollow casing (2, 4) in which a membrane (5) is clamped which, together with a portion of the casing (2, 4), defines at least one chamber (6, 7) of variable volume;
a coil (14) comprising at least one turn (T) formed by a pattern of flat conductive tracks (14.1-14.6) formed on a coil support made of insulating material;
an interaction element (13) adapted to interact magnetically with the coil (14) as a result of a movement of the membrane (5), in such a way that the self-inductance of said coil (14) is variable depending on the relative position of the interaction element (13) with respect to the coil (14), and
circuit means (17) coupled to said coil (14) and adapted to provide an output signal of which a parameter is indicative of the self-inductance of said coil (14), said circuit means (17) comprising a frequency generator (17a) connected to the coil (14), the oscillation frequency of which varies as a result of the variation in self-inductance of the coil (14), an electronic processing circuit (17b) which reads the variation in frequency and generates the output signal, and a feed circuit (17c) adapted to be connected to an external electronic control unit;
**characterized in that**
said coil support is a circuit board (16) which carries said circuit means, said frequency generator, electronic processing circuit and feed circuit being carried by the circuit board,
wherein at least one hole (18) is formed in the circuit board (16), the coil (14) surrounding said at least one hole (18), which hole is configured to receive said interaction element (13) in such a way that one end (13a) of the interaction element (13) is positionable flush with said at least one turn (T) or beyond said at least one turn (T),
wherein said coil comprises a plurality of conductive track layers (14.1-14.6) which are electrically connected to each other and alternate with layers (16.1-16.6) of said circuit board (16).

2. The transducer according to claim 1, wherein one of said interaction element and coil is movable relative to the casing (2, 4) and is coupled to the membrane (5).

3. The transducer according to any of the preceding claims, wherein said circuit means comprise a temperature sensor (17d) configured to provide a temperature signal indicative of the ambient temperature, and processing means (17b) configured to compensate for said output signal on the basis of the temperature signal.

4. The transducer according to any of the preceding claims, wherein the coil (14) is planar.

5. The transducer according to claim 4, wherein an annular magnetic circuit element (21) adapted to interact magnetically with the interaction element (13) is provided, said magnetic circuit element being stationary relative to the coil (14) and arranged co-axially with the interaction element (13).

## Patentansprüche

1. Elektrodynamischer Positionswandler (1), umfassend
ein starres, hohles Gehäuse (2, 4), in dem eine Membran (5) festgehalten wird, die zusammen mit einem Abschnitt des Gehäuses (2, 4) mindestens eine Kammer (6, 7) mit veränderlichem Volumen definiert;
eine Spule (14), umfassend mindestens eine Windung (T), die durch ein Muster von flachen leitfähigen Leiterbahnen (14.1-14.6) gebildet wird, die auf einem Spulenträger aus Isoliermaterial ausgebildet sind;
ein Wechselwirkungselement (13), das eingerichtet ist, infolge einer Bewegung der Membran (5) magnetisch mit der Spule (14) zu interagieren, sodass die Selbstinduktivität der Spule (14) in Abhängigkeit von der relativen Position des Wechselwirkungselements (13) in Bezug auf die Spule (14) veränderlich ist, und
Schaltungsmittel (17), die mit der Spule (14) gekoppelt sind und eingerichtet sind, ein Ausgangssignal bereitzustellen, ein Parameter davon die Selbstinduktivität der Spule (14) anzeigt, wobei die Schaltungsmittel (17) einen Frequenzgenerator (17a), der mit der Spule (14) verbunden ist, dessen Schwingungsfrequenz infolge der Änderung der Selbstinduktivität der Spule (14) ändert, eine elektronische Verarbeitungsschaltung (17b), die die Frequenzänderung liest und das Ausgangssignal erzeugt, und eine Versorgungsschaltung (17c), die eingerichtet ist, mit einer externen elektronischen Steuereinheit verbunden zu werden, umfassen;
**dadurch gekennzeichnet, dass**
der Spulenträger eine Leiterplatte (16) ist, die die Schaltungsmittel trägt, wobei der Frequenzgenerator, die elektronische Verarbeitungsschaltung und die Versorgungsschaltung von der Leiterplatte getragen werden,
wobei mindestens eine Bohrung (18) in der Leiterplatte (16) gebildet wird, wobei die Spule (14) die mindestens eine Bohrung (18) umgibt, wobei die Bohrung dazu konfiguriert ist, das Wechselwirkungselement (13) aufzunehmen, sodass ein Ende (13a) des Wechselwirkungselements (13) bündig mit der mindestens eine Windung (T) oder außerhalb der mindestens eine Windung (T) positioniert werden kann,
wobei die Spule eine Mehrzahl von leitfähigen Leiterbahnschichten (14.1-14.6) umfasst, die elektrisch miteinander verbunden sind und mit Schichten (16.1-16.6) der Leiterplatte (16) abwechseln.

2. Positionswandler nach Anspruch 1, wobei eines von dem Wechselwirkungselement und der Spule in Bezug auf das Gehäuse (2, 4) beweglich ist und mit der Membran (5) gekoppelt wird.

3. Positionswandler nach einem der vorhergehenden Ansprüche, wobei die Schaltungsmittel einen Temperatursensor (17d), der dazu konfiguriert ist, ein Temperatursignal bereitzustellen, das die Umgebungstemperatur anzeigt, und Verarbeitungsmittel (17b), die dazu konfiguriert sind, das Ausgangssignal basierend auf dem Temperatursignals zu kompensieren, umfassen.

4. Positionswandler nach einem der vorhergehenden Ansprüche, wobei die Spule (14) planar ist.

5. Positionswandler nach Anspruch 4, wobei ein ringförmiges magnetisches Schaltungselement (21) vorgesehen ist, das eingerichtet ist, magnetisch mit dem Wechselwirkungselement (13) zu interagieren, wobei das magnetische Schaltungselement in Bezug auf die Spule (14) fest ist und koaxial mit dem Wechselwirkungselement (13) angeordnet ist.

## Revendications

1. Transducteur de position électrodynamique (1) comprenant
- un boîtier rigide et creux (2, 4) dans lequel est serrée une membrane (5) qui, conjointement avec une partie du boîtier (2, 4), définit au moins une chambre (6, 7) de volume variable ;
- une bobine (14) comprenant au moins une spire (T) formée par un motif de pistes conductrices planes (14.1-14.6) formées sur un support de bobine en matériau isolant ;
- un élément d'interaction (13) adapté à interagir magnétiquement avec la bobine (14) à la suite d'un mouvement de la membrane (5), de telle sorte que la auto-inductance de ladite bobine (14) soit variable en fonction de la position relative de l'élément d'interaction (13) par rapport à la bobine (14), et
des moyens de circuit (17) couplés à ladite bobine (14) et adaptés pour fournir un signal de sortie dont un paramètre est indicatif de la auto-inductance de ladite bobine (14), lesdits moyens de circuit (17) comprenant un générateur de fréquence (17a) connecté à la bobine (14), dont la fréquence d'oscillation varie à la suite de la variation de la auto-inductance de la bobine (14), un circuit de traitement électronique (17b) qui lit la variation de fréquence et génère le signal de sortie, et un circuit d'alimentation (17c) adapté à être connecté à une unité de commande électronique externe ;
**caractérisé en ce que**
ledit support de bobine est une carte de circuit (16) qui porte lesdits moyens de circuit, ledit générateur de fréquence, ledit circuit de traitement électronique et ledit circuit d'alimentation étant portés par la carte de circuit,
dans lequel au moins un trou (18) est formé dans la carte de circuit (16), la bobine (14) entourant ledit au moins un trou (18), lequel trou est configuré pour recevoir ledit élément d'interaction (13) de telle sorte qu'une extrémité (13a) de l'élément d'interaction (13) soit positionnable à fleur de ladite au moins une spire (T) ou au-delà de ladite au moins une spire (T),
dans lequel ladite bobine comprend une pluralité de couches de pistes conductrices (14.1-14.6) qui sont électriquement connectées entre elles et alternent avec des couches (16.1-16.6) de ladite carte de circuit (16).

2. Transducteur selon la revendication 1, dans lequel l'un desdits élément d'interaction et bobine est mobile par rapport au boîtier (2, 4) et est couplé à la membrane (5).

3. Transducteur selon l'une quelconque des revendications précédentes, dans lequel lesdits moyens de circuit comprennent un capteur de température (17d) configuré pour fournir un signal de température indicatif de la température ambiante, et des moyens de traitement (17b) configurés pour compenser ledit signal de sortie sur la base du signal de température.

4. Transducteur selon l'une quelconque des revendications précédentes, dans lequel la bobine (14) est plane.

5. Transducteur selon la revendication 4, dans lequel un élément de circuit magnétique annulaire (21) adapté à interagir magnétiquement avec l'élément d'interaction (13) est prévu, ledit élément de circuit magnétique étant stationnaire par rapport à la bobine (14) et disposé coaxialement avec l'élément d'interaction (13).
